# EUROPÄISCHE PATENTANMELDUNG

(11) **EP 0 816 769 A2**
(43) Veröffentlichungstag der Anmeldung: **07.01.1998**
(21) Anmeldenummer: 97110091.2
(22) Anmeldetag: 20.06.1997
(51) Int. Cl.: F24F 12/00

(54) **Umluft-Betriebsvorrichtung für ein Zwangslüftungsgerät**

(30) Priorität: 02.07.1996 DE 29611515 U
(71) Anmelder: SIEGENIA-FRANK KG, 57074 Siegen (DE)
(72) Erfinder: Kucharczyk, Eckhard, 57234 Wilnsdorf-Oberdielfen (DE); Wader, Gerhard, 58511 Lüdenscheid (DE)

(57) **Zusammenfassung**

Die Erfindung betrifft eine Umluft-Betriebsvorrichtung für ein im Inneren eines Raumes angeordnetes Zwangslüftungsgerät 1, welches über zwei einander benachbart liegende Strömungswege 14, 15 für einen Zuluft- und einen Abluftstrom mit der Außenluft in Verbindung steht, wobei die beiden Strömungswege 14, 15 eine gemeinsame, sie unmittelbar gegeneinander abgrenzende Wandung 16 haben.

Die erfindungsgemäße Umluft-Betriebsvorrichtung ist dadurch gekennzeichnet, daß ein Teilstück der gemeinsamen Wandung 16 aus einer in ihrer Umrißform auf den lichten Gesamtquerschnitt beider Strömungskanäle abgestimmten Schwenkklappe 17 besteht, daß die etwa auf gleicher Ebene mit der gemeinsamen Wandung 16 gelagerte Schwenkklappe 17 zwischen einer mit dieser Wandung fluchtenden Lage und einer Querlage dazu verstellbar ist, und daß bei Querlage der Schwenkklappe 17 die durch die in der gemeinsamen Wandung freigegebene Unterbrechung 19 eine Strömungskurzschlußumlenkung zwischen den beiden Strömungswegen 14, 15 gebildet ist.

## Beschreibung

Die Erfindung betrifft ein im Inneren eines Raumes angeordnetes Zwangslüftungsgerät, welches über zwei einander benachbart liegende Strömungswege für einen Zuluft- und einen Abluftstrom mit der Außenluft in Verbindung steht, wobei die beiden Strömungswege eine gemeinsame, sie unmittelbar gegeneinander abgrenzende Wandung haben.

Es wird vorgeschlagen, ein solches Zwangslüftungsgerät zusätzlich mit einer Umluft-Betriebsvorrichtung auszustatten, die sich dadurch auszeichnet,
- daß ein Teilstück der gemeinsamen Wandung der beiden Strömungswege aus einer in ihrer Umrißform auf den lichten Gesamtquerschnitt beider Strömungskanäle abgestimmten Schwenkklappe besteht,
- daß die etwa auf gleicher Ebene mit der gemeinsamen Wandung gelagerte Schwenkklappe zwischen einer mit dieser Wandung fluchtenden Lage und einer Querlage dazu verstellbar ist,
- und daß bei Querlage der Schwenkklappe durch die in der gemeinsamen Wandung freigegebene Unterbrechung eine Strömungskurzschluß-Umlenkung zwischen beiden Strömungswegen gebildet ist.

Vorteilhaft bei einer solchen Ausstattung eines Zwangslüftungsgerätes ist, daß sich mit einfachsten Mitteln eine Umstellung des Zwangslüftungsgerätes von Luftwechsel-Betrieb auf Umluft-Betrieb herbeiführen läßt. Das beispielsweise dann, wenn es darauf ankommt, die im Inneren eines Raumes befindliche Luft nicht ständig gegen einen Frischluftstrom entsprechender Größenordnung auszutauschen, sondern sie lediglich mittels im Zwangslüftungsgerät befindlicher Filter von vorhandener Staub- und/oder Schadstoffbelastung zu befreien.

Besonders zweckmäßig ist es dabei nach der Erfindung, wenn die beiden Strömungswege miteinander einen Auskleidungs-Rohreinsatz für den Einbau in Wand- bzw. Mauerdurchbrüche bilden, der sich problemlos - auch nachträglich noch - ohne zusätzlichen Platzbedarf innerhalb des Raumes oder des Zwangslüftungsgerätes selbst in Benutzung nehmen läßt. Hierzu ist es lediglich notwendig, den bereits im Wand- oder Mauerdurchbruch befindlichen Auskleidungs-Rohreinsatz durch einen erfindungsgemäß ausgelegten Rohreinsatz zu ersetzen.

Erfindungsgemäß ist es besonders empfehlenswert, wenn der Auskleidungs-Rohreinsatz eine kreisförmige Umfangs- bzw. Mantelbegrenzung aufweist, weil er sich dann einfach in einen durch Bohren hergestellten Wand- oder Mauerdurchbruch axial einschieben läßt.

Als sinnvoll erweist es sich auch, die Schwenkklappe durch einen Kraftantrieb zwischen ihrer Fluchtlage und ihrer Querlage umstellbar vorzusehen. Dabei kann als Kraftantrieb ein elektrischer Stellmotor, vorzugsweise für den Betrieb mit Kleinstspannung, benutzt werden, der sich durch eine Sensor-Steuerung beeinflussen läßt.

In wenigstens einem Strömungsweg des Lüftungsgerätes kann ein Filter angeordnet werden. Ebenso ist es möglich im Zuluft-Strömungsweg des Lüftungsgerätes eine Heizung, z. B. ein elektrisches Heizregister, vorzusehen. Im Lüftungsgerät läßt sich aber auch ein Wärmetauscher, vorzugsweise von der rekuperativen Bauart, anordnen, wobei dieser von beiden Strömungswegen her aufschlagbar ist.

Damit bei Umluft-Betriebsstellung der Schwenkklappe über diese kein übermäßiger Wärmeabtransport aus dem Rauminneren zur Außenluft hin stattfinden kann, ist es in jedem Falle empfehlenswert der Schwenkklappe in schlecht wärmeleitender Ausgestaltung zu verwenden. Beispielsweise kann sie von einem Hohlkörper aus schlecht wärmeleitenden Kunststoff gebildet werden oder einen Wärmedämmbelag tragen.

Ein Ausführungsbeispiel des Gegenstandes der Erfindung ist in der Zeichnung schematisch vereinfacht dargestellt. Es zeigt
- Fig. 1: im Vertikalschnitt ein im Innneren eines Raumes, beispielsweise an einer Wand, montiertes Zwangslüftungsgerät mit einer ihm - innerhalb der Wand - zugeordneten Umluft-Betriebsvorrichtung in ihrer Umluft-Betriebsstellung,
- Fig. 2: die Umluft-Betriebsvorrichtung nach Fig. 1 bei ihrer Zu- und Abluft-Betriebsstellung und
- Fig. 3: eine Schnittansicht in Richtung III der Fig. 2 auf die Umluft-Betriebsvorrichtung.

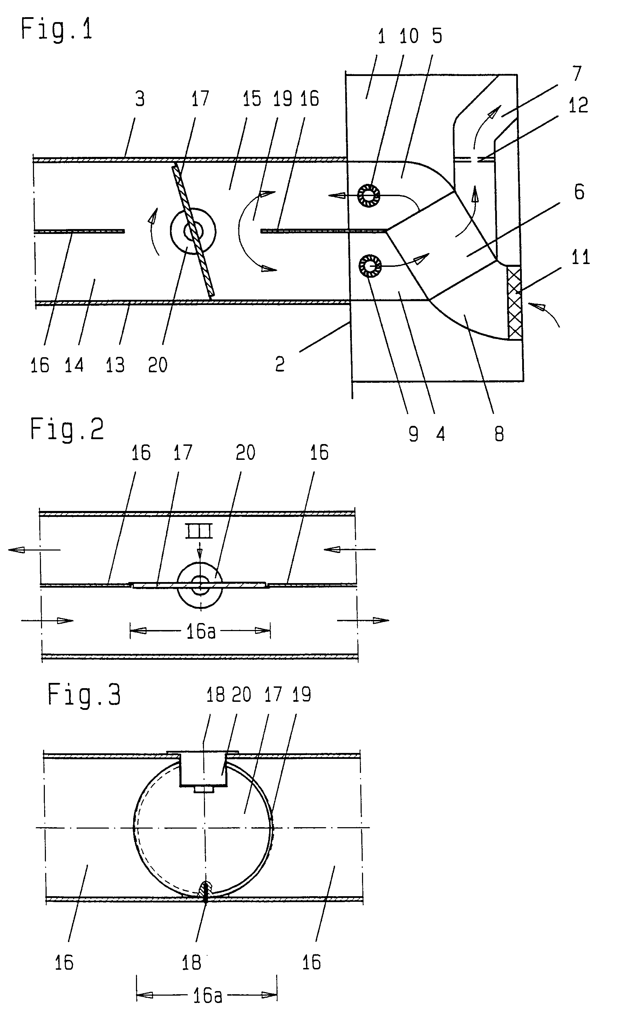

Nach Fig. 1 ist ein Zwangslüftungsgerät 1 an der Innenseite einer Raumwand 2 befestigt, in der sich ein Mauerdurchbruch 3 in Form einer Bohrung befindet. Im Zwangslüftungsgerät 1 sind zwei einander benachbart liegende Strömungswege, nämlich ein Zuluft-Strömungsweg 4 und ein Abluft-Strömungsweg 5 ausgebildet. Jeder derselben mündet einerends in den Mauerdurchbruch 3, während sich an ihn anderenends ein Wärmetauscher 6, beispielsweise der rekuperativen Kreuzstrom-Bauart, anschließt. Durch den Wärmetauscher 6 steht der Zuluft-Strömungsweg 4 mit einem Zuluft-Austritt 7 des Zwangslüftunggerätes 1 in Verbindung, während der Abluft-Strömungsweg 5 über den Wärmetauscher 6 an einen Abluft-Eintritt 8 des Zwangslüftungsgerätes 1 angeschlossen ist. Der Zuluft-Strömungsweg 4 wird von einem Zuluft-Gebläse 9 und der Abluft-Strömungsweg 5 von einem Abluft-Gebläse 10 beaufschlagt. Mindestens in den Abluft-Eintritt 8 ist ein Filterelement 11 eingebaut. Ein solches kann sich zusätzlich aber auch im Bereich des Zuluft-Austritt 7 befinden. Zwischen dem Zuluft-Austritt 7 des Zwangslüftungsgerätes 1 und dem Wärmetauscher 6 kann sich eine zusätzliche Heizung 12, beispielsweise ein elektrisches Heizregister, befinden.

Der Fig. 1 der Zeichnung läßt sich entnehmen, daß der Zuluft-Strömungsweg 4 und der Abluft-Strömungsweg 5 des Zwangslüftungsgerätes 1 an einen Auskleidungs-Rohreinsatz 13 angedockt sind, der in dem als Bohrung hergestellten Mauerdurchbruch 3 aufgenommen ist. Auch dieser Auskleidungs-Rohreinsatz 13 hat dabei zwei einander benachbarte Strömungswege 14 und 15, die durch eine in Längsrichtung verlaufende diametrale Wandung 16 gegeneinander abgegrenzt sind.

Das mittlere Längenteilstück 16a der gemeinsamen Wandung 16 besteht aus einer in ihrer Umrißform auf den lichten Gesamtquerschnitt beider Strömungswege 14 und 15 abgestimmten Schwenkklappe 17, die um eine etwa auf gleicher Ebene mit der gemeinsamen Wandung 16 verlaufende Achse 18-18 zwischen einer mit dieser Wandung 16 fluchtenden Lage (vgl. Fig. 2) und einer Querlage dazu (vgl. Fig. 1) verstellbar ist. Bei der Querlage der Schwenkklappe 17 wird durch die in der gemeinsamen Wandung 16 freigegebe Unterbrechung 19 eine Strömungskurzschluß-Umlenkung zwischen beiden Strömungswegen 14 und 15 gebildet, an die sich dann Zuluft-Strömungsweg 4 und der Abluft-Strömungsweg 5 des Zwangslüftungsgerätes 1 unmittelbar anschließen.

Da der Auskleidungs-Rohreinsatz 13 eine kreisförmige Umfangs- bzw. Mantelbegrenzung aufweist, hat selbstverständlich auch die Schwenkklappe 17 eine wenigstens annährend kreisförmig begrenzte Umrißform, wie das Figur 3 erkennen läßt.

Die Schwenkklappe 17 kann durch einen vom einem elektrischen Stellmotor 20 gebildeten Kraftantrieb zwischen den beiden extremen Lagen nach Fig. 1 und 2 verlagert werden, wobei die jeweilige Winkellage durch geeignete Anschläge begrenzbar ist. In den meisten Fällen reicht es aus, den elektrischen Stellmotor 20 mit Kleinstspannung zu betreiben, wobei er sich durch eine Sensor-Steuerung beeinflussen läßt, die beispielsweise auf den jeweiligen Raumluft-Zustand oder auch Außenluft-Zustand anspricht.

### BEZUGSZEICHENLISTE

- 1: Zwangslüftungsgerät
- 2: Raumwand
- 3: Mauerdurchbruch
- 4: Zuluft-Strömungsweg
- 5: Abluft-Strömungsweg
- 6: Wärmetauscher
- 7: Zuluft-Austritt
- 8: Abluft-Eintritt
- 9: Zuluft-Gebläse
- 10: Abluft-Gebläse
- 11: Filterelement
- 12: Heizung
- 13: Auskleidungs-Rohreinsatz
- 14: Strömungsweg
- 15: Strömungsweg
- 16: Gemeinsame Wandung
- 16a: Mittleres Längenteilstück
- 17: Schwenkklappe
- 18-18: Achse
- 19: Unterbrechung
- 20: Elektrischer Stellmotor

## Patentansprüche

1. Umluft-Betriebsvorrichtung für ein im Inneren eines Raumes angeordnetes Zwangslüftungsgerät (1), welches über zwei einander benachbart liegende Strömungswege (14 und 15) für einen Zuluft- und einen Abluftstrom mit der Außenluft in Verbindung steht,
wobei die beiden Strömungswege (14 und 15) eine gemeinsame, sie unmittelbar gegeneinander abgrenzende Wandung (16) haben,
dadurch gekennzeichnet,
daß ein Teilstück (16a) der gemeinsamen Wandung (16) aus einer in ihrer Umrißform auf den lichten Gesamtquerschnitt beider Strömungskanäle abgestimmten Schwenkklappe (17) besteht,
daß die etwa auf gleicher Ebene mit der gemeinsamen Wandung (16) gelagerte (18-18) Schwenkklappe (17) zwischen einer mit dieser Wandung fluchtenden Lage (Fig. 2) und einer Querlage (Fig. 1) dazu verstellbar ist,
und daß bei Querlage (Fig. 1) der Schwenkklappe (17) durch die in der gemeinsamen Wandung (16) freigegebene Unterbrechung (19) eine Strömungskurzschluß-Umlenkung zwischen beiden Strömungswegen (14 und 15) gebildet ist.

2. Umluft-Betriebsvorrichtung nach Anspruch 1,
dadurch gekennzeichnet,
daß die beiden Strömungswege (14 und 15) miteinander einen Auskleidungs-Rohreinsatz (13) für den Einbau in Wand- oder Mauerdurchbrüche (3) bilden.

3. Umluft-Betriebsvorrichtung nach einem der Ansprüche 1 und 2,
dadurch gekennzeichnet,
daß der Auskleidungs-Rohreinsatz (13) eine kreisförmige Umfangs- bzw. Mantelbegrenzung aufweist.

4. Umluft-Betriebsvorrichtung nach einem der Ansprüche 1 bis 3,
dadurch gekennzeichnet,
daß die Schwenkklappe (17) durch einen Kraftantrieb (20) zwischen ihrer Fluchtlage (Fig. 2) und ihrer Querlage (Fig. 1) umstellbar ist.

5. Umluft-Betriebsvorrichtung nach einem der Ansprüche 1 bis 4,
dadurch gekennzeichnet,
daß der Kraftantrieb ein elektrischer Stellmotor (20), vorzugsweise für den Betrieb mit Kleinstspannung, ist.

6. Umluft-Betriebsvorrichtung nach einem der Ansprüche 1 bis 5,
dadurch gekennzeichnet,
daß der Kraftantrieb (20) durch eine Sensor-Steuerung beeinflußbar ist.

7. Umluft-Betriebsvorrichtung nach einem der Ansprüche 1 bis 6,
dadurch gekennzeichnet,
daß in wenigstens einem Strömungsweg (8) des Lüftungsgerätes (1) ein Filter (11) angeordnet ist.

8. Umluft-Betriebsvorrichtung nach einem der Ansprüche 1 bis 7,
dadurch gekennzeichnet,
daß im Zuluft-Strömungsweg (7) des Lüftungsgerätes (1) eine Heizung (12), z.B. ein elektrisches Heizregister, vorgesehen ist.

9. Umluft-Betriebsvorrichtung nach einem der Ansprüche 1 bis 8,
dadurch gekennzeichnet,
daß im Lüftungsgerät (1) ein Wärmetauscher (6), vorzugsweise der rekuperativen Bauart, angeordnet und von zwei Strömungswegen (4 und 8) her beaufschlagbar ist.
